# FASCICULE DE BREVET EUROPEEN

(11) **EP 1 497 208 B1**
(45) Date de publication et mention de la délivrance du brevet: **20.09.2006**
(21) Numéro de dépôt: 03738220.7
(22) Date de dépôt: 11.04.2003
(51) Int. Cl.: B65G 47/68

(54) **UNITE DE CONVOYAGE AVEC ACCUMULATION DE RECIPIENTS, TELS QUE DES BOUTEILLES**
STAUFÖRDERER FÜR BEHÄLTER WIE FLASCHEN
CONVEYOR UNIT WITH ACCUMULATION OF RECEPTACLES SUCH AS BOTTLES

(30) Priorité: 12.04.2002 FR 0204592
(43) Date de publication de la demande: 19.01.2005
(73) Titulaire: GEBO INDUSTRIES (SOCIETE ANONYME), 67116 Reichstett (FR)
(72) Inventeur: PETROVIC, Zmaj, F-67450 Mundolsheim (FR)
(74) Mandataire: Rhein, Alain
(86) Numéro de dépôt international: PCT/FR2003/001148
(87) Numéro de publication internationale: WO 2003/086916

(56) Documents cités:
- JP-A- 61 051 415
- US-A- 3 104 753
- US-A- 3 240 311
- US-A- 4 054 199
- US-B1- 6 168 005

## Description

L'invention a trait à une unité de convoyage avec accumulation de récipients, telles que des bouteilles, conforme au préambule de la revendication 1.

La présente invention trouvera son application dans le domaine des installations de convoyage de récipients, en particulier de bouteilles.

Dans une ligne de conditionnement de produit dans des récipients, telles que les unités d'embouteillage, ces récipients passent dans plusieurs postes de traitement, par exemple dans une unité de lavage, une sous-tireuse, une étiqueteuse, voire dans un conditionneur, postes entre lesquels ces récipients ou bouteilles se déplacent à l'aide de convoyeurs, notamment à chaînes. En fait, il se trouve que ces postes ont des cadences de production qui diffèrent de sorte qu'au niveau du convoyage intermédiaire il est nécessaire de constituer des stocks tampons de récipients, sans compter que certains de ces postes nécessitent des interventions plus fréquentes que d'autres. Aussi, pour éviter, lors d'une telle intervention, l'arrêt complet d'une installation, par exemple d'une chaîne d'embouteillage, il est prévu des tables d'accumulation permettant de stocker temporairement les bouteilles en provenance d'une unité de traitement amont, jusqu'à fin d'intervention et la remise en route de l'unité de traitement avale.

L'on connaît, par exemple par le document JP-A-61 051415, une table d'accumulation disposée parallèlement à un convoyeur unifilaire sur lequel arrivent les récipients les uns après les autres. Lorsqu'un blocage intervient en partie avale de ce convoyeur unifilaire, ces récipients s'échappent latéralement sur la table d'accumulation. C'est au travers d'une inversion du sens de fonctionnement des chaînes composant cette dernière que les récipients stockés sont à nouveau réinjectés sur le convoyeur unifilaire.

L'on comprend bien que le nombre des bouteilles susceptibles d'être stockées entre deux postes détermine le temps dont dispose un opérateur pour assurer son intervention sans qu'il ne soit nécessaire d'arrêter totalement la chaîne de production.

En somme, plus il est possible d'accumuler des récipients entre deux unités de traitement successives, plus l'installation de conditionnement est souple d'utilisation.

Evidemment, cela n'est pas sans certaines concessions. En particulier, les unités de convoyage avec accumulation s'avèrent particulièrement encombrantes ce qui pose le problème de leur intégration sur un site de production où l'on est amené à optimiser l'occupation de la surface au sol.

Si l'on prend le cas particulier d'une table d'accumulation du type décrit dans le document WO-00/41955, celle-ci présente une grande capacité d'accumulation sans pression de récipients. Toutefois, sa longueur associée, en aval, à celle d'un aligneur sans pression de ces récipients ayant pour but d'acheminer ces derniers de manière unifilaire en direction d'une unité de traitement suivante, s'avère la plupart du temps trop importante pour que cet ensemble puisse trouver sa place dans une chaîne de production.

A ce propos, si, dans les installations nouvellement mises en place, il est usuel d'intégrer, entre deux postes de traitement successifs, des unités de convoyage avec accumulation, il est recherché, de plus en plus fréquemment, d'en équiper, également, les installations existantes et, dans ce cas, le problème évoqué plus haut n'est qu'accentué.

L'on connaît encore d'autres unités de convoyage avec accumulation constituées, substantiellement, par deux convoyeurs hélicoïdaux imbriqués, l'un progressant dans un sens et l'autre dans le sens inverse, tandis qu'un dispositif de transfert est prévu apte à assurer le passage des récipients, s'accumulant sur le premier convoyeur et en provenance d'une unité de traitement en amont, vers le second convoyeur alimentant une unité de traitement en aval. Ce dispositif de transfert est à même de progresser le long de l'hélice entre les deux convoyeurs en fonction de la quantité de récipients accumulée.

Les inconvénients d'un tel mode de réalisation découlent de sa complexité. En particulier, les interventions par un opérateur sont rendues très difficiles. Par ailleurs, l'on conçoit facilement que pour permettre le transfert d'un récipient d'un convoyeur sur l'autre, ceux-ci ne peuvent être équipés de rails de guidage sur leurs côtés latéraux communicants. Aussi, les chutes de récipients sont fréquentes et la vitesse de progression de ces derniers est nécessairement réduite.

Ces unités présentent également un problème d'intégration en raison de leur encombrement, non pas en longueur, mais en largeur et en hauteur sans compter qu'ils ont une capacité d'accumulation souvent largement inférieure à une table du type décrit dans le document WO 00/41955.

On connaît encore par le document US-A-3.104.753, une machine de manutention d'articles tels que des bouteilles conforme au préambule de la revendication 1.

En fin de compte, la présente invention a su répondre aux inconvénients précités au travers d'une unité de convoyage composée d'une table d'accumulation et d'un aligneur sans pression de récipients qui, au travers d'une disposition particulière de ces derniers, s'avère d'un encombrement très faible tenant compte de la capacité d'accumulation qu'elle procure.

A cet effet, l'invention concerne une unité de convoyage avec accumulation de récipients, tels que des bouteilles, selon la revendication 1.

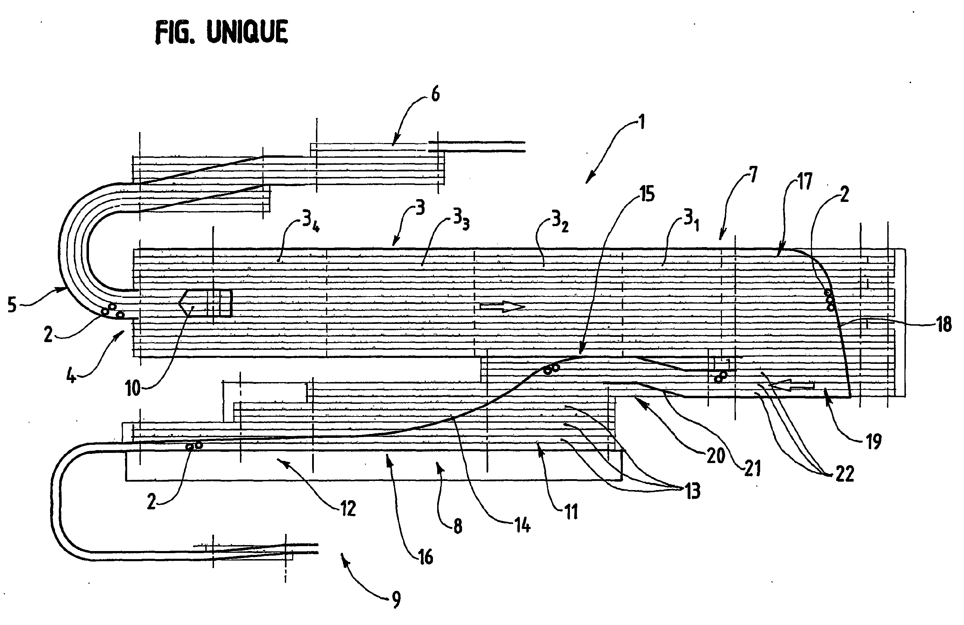

Les avantages découlant de la présente invention apparaîtront au cours de la description qui va suivre se rapportant à un exemple de réalisation représenté dans la figure du dessin ci-joint.

Telle que représentée dans cette figure, la présente invention a trait à une unité de convoyage 1 avec accumulation de récipients 2, en particulier de bouteilles.

Elle comporte une table d'accumulation 3 en amont 4 de laquelle débouche un convoyeur d'alimentation 5 en récipients provenant d'une unité de traitement amont 6, tandis que dans sa partie avale 7 cette table d'accumulation 3 est prévue apte à déverser les récipients 2 sur un aligneur sans pression 8 prévu à acheminer ces récipients de manière unifilaire en direction d'une unité de traitement en aval 9.

Pour en revenir à la table d'accumulation 3, elle est du type décrit dans le document WO.00/41955 et est constituée d'une juxtaposition de chaînes dont la vitesse peut être régulée de manière à constituer, en partie avale 7, un stock tampon de récipients destiné à éviter une rupture d'alimentation en récipients 2 au niveau de l'unité de traitement aval 9.

Par ailleurs, sur certaines de ces chaînes dont la progression est stoppée en période d'accumulation sont à même d'être repoussés les récipients acheminés par les chaînes en mouvement. Ainsi, cette accumulation sur les chaînes immobilisées s'effectue sans pression.

Un répartiteur 10 placé en amont 4 de la table 3 garantit une bonne répartition de ces récipients sur toute la largeur de cette dernière.

En outre, cette table 3 peut être de longueur ajustable à la quantité de récipients 2 que l'on cherche à accumuler entre deux unités de traitement 6, 9. En particulier cette table 3 peut être constituée d'un ou plusieurs modules 3₁, 3₂, 3₃, 3₄.

Quant à l'aligneur sans pression 8, il est constitué, là encore, d'une table 11 ayant pour but d'étirer un flux de récipients de manière à présenter ceux-ci en file indienne en partie avale 12.

Ainsi, cette table 11 est constituée d'une juxtaposition de chaînes à circuit bouclé 13, les récipients 2 étant progressivement repoussés, par l'intermédiaire d'un rail de guidage 14, d'un côté latéral 15 de cette table 11 en direction du côté latéral opposé 16, tenant compte que dans cette direction transversale, les chaînes 13 sont à vitesse de défilement progressivement croissante, précisément dans le but d'étirer le flux des récipients 2.

Selon l'invention, cet aligneur sans pression 8 s'étend parallèlement à la table d'accumulation 3, tenant compte que les récipients sont amenés à s'y déplacer dans une direction contraire à leur progression sur cette table 3. En fait, celle-ci comporte dans le prolongement de sa partie avale 7 un convoyeur de transfert 17 surmonté d'un rail de guidage 18 venant repousser les récipients 2 latéralement sur un convoyeur de transition 19 à sens de défilement inverse qui lui est directement juxtaposé et venant alimenter, en amont 20, l'aligneur sans pression 8.

Il est connu que plus un tel aligneur sans pression est long plus la probabilité que deux récipients se présentent côte à côte dans sa partie avale 12 est faible. Il se trouve que par l'effet de cisaillement que procure le convoyeur de transition 19 à sens de défilement inverse par rapport aux chaînes du convoyeur de transfert 17, le flux des récipients est d'entrée de jeux étiré et ces derniers progressent sur ledit convoyeur de transition 19 sur guerre plus de deux fils. Dans ces conditions, il est évidemment plus aisé d'imbriquer ces récipients les uns dans les autres pour les présenter de manière unifilaire au niveau de l'unité de traitement avale 9.

Ce convoyeur de transition 19 est surmonté d'un rail de guidage 21 prévu pour repousser les récipients légèrement transversalement par rapport à leur progression, ceci dans une direction opposée à celle qui leur est ensuite communiquée par le rail de guidage 14 au-dessus de la table 11 correspondant à l'aligneur sans pression 8.

En somme, au travers de ce rail de guidage 21 l'on vient repousser les récipients qui se sont le plus écartés latéralement au cours de leur transfert, en direction de la file dans lesquels ils sont amenés à s'imbriquer.

Avantageusement, dans une direction transversale et en s'écartant du convoyeur de transfert 17, les chaînes 22 du convoyeur de transition 19 présentent un gradient de vitesse allant croissant, là encore dans le but d'accentuer cet effet d'imbrication des récipients les uns dans les autres en amont de l'aligneur sans pression 8.

Comme il ressort de la description qui précède, la présente invention permet de disposer d'une unité de convoyage de récipients avec accumulation particulièrement compacte, bien moins longue par rapport à des unités à table d'accumulation classique et de largeur plus faible en comparaison aux convoyeurs à accumulation spirale.

Par rapport à ces derniers, une telle unité de convoyage présente, en outre, la particularité, d'être de capacité d'accumulation modulable.

En conséquence, la présente invention vient répondre de manière avantageuse au problème posé.

## Revendications

1. Unité de convoyage avec accumulation de récipients (2), tels que des bouteilles, comportant
une table d'accumulation (3) sur laquelle débouche, en amont, un convoyeur d'alimentation (5);
un convoyeur de transfert (17) en aval et dans le prolongement de la table d'accumulation (3);
un convoyeur de transition (19) juxtaposé et à sens de défilement inverse au convoyeur de transfert (17);
un aligneur sans pression (8) s'étendant parallèlement à la table d'accumulation (3) et étant constitué par une table (11), l'aligneur sans pression (8) étant prévu apte à acheminer les récipients (2) de manière unifilaire en direction d'une unité de traitement (9) en aval et étant alimenté en amont par le convoyeur de transition (19);
**caractérisée par le fait que** le convoyeur de transfert (17) comprend un rail de guidage (18) pour repousser latéralement les récipients sur le convoyeur de transition (19), que l'aligneur sans pression (8) comprend un rail de guidage (14) au-dessus de la table (11) pour aligner les récipients de manière unifilaire et que le convoyeur de transition est surmonté d'un rail de guidage (21) pour repousser les récipients (2) transversalement par rapport à leur progression et dans une direction opposée à celle qui leur est communiquée par le rail de guidage (14) de l'aligneur sans pression (8).

2. Unité de convoyage avec accumulation selon la revendication 1, **caractérisée par le fait que** le convoyeur de transition (19) est constitué d'une juxtaposition de chaînes (22) présentant un gradient de vitesse allant croissant dans une direction transversale en s'écartant du convoyeur de transfert (17).

## Claims

1. Conveyor unit with accumulation of containers (2), such as bottles, including
an accumulation table (3) on which opens, upstream, a feeding conveyor (5);
a transfer conveyor (17) downstream and in range with the accumulation table (3) ;
a transition conveyor (19) juxtaposed and running in the opposite direction with respect to the transfer conveyor (17);
a pressureless aligner (6) extending parallel to the accumulation table (3) and being composed of a table (11), the pressureless aligner (8) being designed to be able to convey the containers (2) along one line toward a processing unit (9) downstream and being fed upstream by the transition conveyor (19); **characterized in that** the transfer conveyor (17) includes a guide rail (18) for pushing laterally the containers on the transition conveyor (19), that the pressureless aligner (8) includes a guide rail (14) above the table (11) in order to align the containers along one line, and that the transition conveyor is surmounted by a guide rail (21) for pushing the containers (2) transversally with respect to their advance and in a direction opposite to that communicated to them by the guide rail (14) of the pressureless aligner (8).

2. Conveyor unit with accumulation according to claim 1, **characterized in that** the transition conveyor (19) consists of a juxtaposition of chains (22) having a velocity gradient gradually increasing in a transversal direction diverging from the transfer conveyor (17).

## Patentansprüche

1. Stauförderer für Behälter (2), wie Flaschen, umfassend
einen Stautisch (3), auf dem aufwärts ein Beschickungsförderer (5) endet ;
einen Transferförderer (17), abwärts und in der Verlängerung des Stautisches (3) ;
einen Übergangsförderer (19), nebeneinanderlaufend und mit umgekehrter Durchlaufrichtung zu dem Transferförderer (17) ;
wobei ein druckloser Anordner (8) sich parallel zu dem Stautisch (3) erstreckt und durch einen Tisch (11) gebildet sei, wobei der drucklose Anordner (8) geeignet vorgesehen ist, um die Behälter (2) in Richtung einer abwärtsen Bearbeitungsanlage (9) einreihig hinzuführen und aufwärts durch den Übergangsförderer (19) beschickt sei ;
**dadurch gekennzeichnet, daß** der Transferförderer (17) eine Führungsschiene (18) umfaßt, um die Behälter auf den Übergangsförderer (19) seitlich aufzutreiben, daß der drucklose Anordner (8) eine Führungsschiene (14) oberhalb des Tisches (11) umfaßt, um die Behälter einreihig anzugleichen, und daß der Übergangsförderer mit einer Führungsschiene (21) gekrönt ist, um die Behälter (2) quer hinsichtlich ihrer Fortschreitung und in einer Richtung aufzutreiben, die jener entgegengesetzt ist, die ihnen durch die Führungsschiene (14) des drucklosen Anordners (8) übermittelt ist.

2. Stauförderer nach Anspruch 1, **dadurch gekennzeichnet, daß** der Übergangsförderer (19) durch eine Nebeneinanderstellung von Ketten (22) gebildet ist, die ein Geschwindigkeitsgefälle aufweisen, das nach einer querliegenden Richtung steigt, die sich von dem Transferförderer (17) entfernt.
